# EUROPEAN PATENT SPECIFICATION

(11) **EP 2 091 350 B1**
(45) Date of publication and mention of the grant of the patent: **05.01.2011**
(21) Application number: 07821562.1
(22) Date of filing: 19.10.2007
(51) Int. Cl.: A23J 3/22, A23J 3/14

(54) **METHOD FOR PREPARING A VEGETABLE FOOD PRODUCT AND VEGETABLE FOOD PRODUCT THEREBY OBTAINED**
VERFAHREN ZUR HERSTELLUNG EINES GEMÜSENAHRUNGSMITTELS, UND SO ERHALTENES GEMÜSENAHRUNGSMITTEL
PROCÉDÉ DE PRÉPARATION D'UN PRODUIT ALIMENTAIRE VÉGÉTAL ET PRODUIT ALIMENTAIRE VÉGÉTAL AINSI OBTENU

(30) Priority: 23.10.2006 WO PCT/EP2006/010196
(43) Date of publication of application: 26.08.2009
(73) Proprietor: Alpro Comm. VA, 8560 Wevelgem (BE)
(72) Inventor: VAN HOOFF, Franciscus Laurentius, 5591 BM Heeze (NL); SEEGERS, Johannes Catherina Lambertus Gerardus, 6061 BC Posterholt (NL); CORSTEN, Leonardus Laurentius Hubertus, 6045 AN Roermond (NL); NEIRYNCK, Nico Hector Albert, 8870 Izegem (BE)
(74) Representative: Vanhalst, Koen
(86) International application number: PCT/EP2007/061198
(87) International publication number: WO 2008/049787

(56) References cited:
- EP-A1- 0 010 798
- WO-A-03/075675
- GB-A- 1 516 733
- GB-A- 1 544 812
- US-A- 3 792 175
- DATABASE WPI Week 199953 Derwent Publications Ltd., London, GB; AN 1999-618014 XP002438387 & NL 1 008 364 C2 (KWELDAM A C) 30 August 1999 (1999-08-30) cited in the application

## Description

### Field of the invention

The present invention relates to the field of food technology, and in particular to the preparation of meat substitute products. The present invention is directed to a method for preparing a protein-based and fibrous vegetable food product, a 100% vegetable and preferably gluten-free food product. The present invention also provides vegetable food products, and 100% vegetable and preferably gluten-free food products.

### Background

Meat substitutes are products that approximate the aesthetic and organoleptic qualities including primarily texture, flavor and appearance, and/or chemical characteristics of certain types of meat. The market for meat-less foods includes health-conscious non-vegetarians, persons following certain dietary rules, or vegetarians and vegans.

In the art of preparing meat substitutes, there is a continuing effort being made to duplicate natural meats as closely as possible. It has long been recognized that relatively inexpensive protein materials from high-purity secondary protein sources, such as wheat, rice, (soy)beans, rapeseed etc., can be used to produce a product which simulates natural meat tissue. However, an important obstacle has been the inability to impart the natural and accustomed chewy, fibrous texture to the secondary protein source materials. Natural meat products inherently possess a texture giving them a definite "mouthfeel" and "bite" which is clearly recognized and strongly preferred.

A number of methods have been developed for treating secondary protein source material to produce a texturized product.

NL 1 008 364 for instance discloses a method for preparing a meat substitute product in which a protein, a plant-derived thickening agent and water are mixed at elevated temperatures to form an aqueous emulsion. The emulsion is then mixed with an ion solution containing calcium and/or magnesium salt, to form a fibrous product. This fibrous product is subsequently rinsed with water; and excess water is removed from the fibrous product. The fibrous product can then be further processed to form food products, such as a sausages, burgers, pastes, etc...

Another example of a method for the preparation of a meat substitute product is disclosed in WO 2003/061400, and comprises mixing of a protein, e.g. an animal protein or a material derived there from, a hydrocolloid which precipitates with metal cations, and water at elevated temperature until a homogenous mixture is formed. The mixture is then mixed with a solution of a metal cation to form a fibrous product. The obtained fibrous product can be further shaped into a particular three-dimensional shape.

Still another example of a method for the preparation of a meat analogue food product is disclosed in GB 1516733, which is directed to the preparation of textured protein food products and the food products thereby obtained. The process involves the coating of particular textured protein material with a solution containing a binder, shaping the coated material and heating the shaped product.

However, a drawback of the above-mentioned methods is that the food products, which are obtained after processing (e.g. shaping) of the fibrous products, do not have a texture giving them a definite mouthfeel and/or bite which clearly resembles that of meat products.

Another important drawback of the above-mentioned methods is that the obtained fibrous products do not have satisfying binding properties. As a consequence thereof, it is difficult to press or form such fibrous products into certain three-dimensional shapes, such as e.g. burgers, and often the products fall apart during processing thereof.

In addition, in some instances, in these methods ingredients of animal origin are applied, resulting in food products which are not suitable for specific consumer groups such as vegetarians and vegans.

In view of the above it is clear that there remains a need in the art for an improved method for preparing vegetable food products. It is desired that such improved methods are economical, easy and safe to use, and provide food products with suitable nutritional, organoleptic and/or texture properties.

It is therefore an object of the invention to provide a method that overcomes at least some of the above mentioned drawbacks.

More in particular, it is an object of the invention to provide an improved method for preparing vegetable food products, in particular 100% vegetable food products, wherein said food products show improved quality, nutritional (e.g. protein content), organoleptic (e.g. a better taste) and texture (e.g. a better "mouthfeel" or "bite") properties.

It is another, but important object of the present invention to provide an improved method for preparing vegetable food products that have enhanced binding properties, so that their processing into certain three-dimensional shapes is facilitated, and the vegetable food product (e.g. a burger) does not fall apart during heating prior to consumption.

### Summary of the invention

The present invention relates to a method for preparing a vegetable food product comprising the steps of:
a) preparing a protein-hydrocolloid composition by mixing a vegetable protein with a hydrocolloid selected from the group consisting of alginates and/or carrageenans,
b) blending the composition of step a) with an aqueous di- or more valent ion solution or dispersion thereby obtaining a fibrous product,
c) rinsing of the fibrous product obtained in step b),
d) optionally concentrating the rinsed fibrous product of step c), and
e) processing the fibrous product of step c) or d) thereby obtaining said vegetable food product,
characterized in that the method comprises the additional step of blending a non-animal binding agent in powder form with the fibrous product of step c) or d) prior to processing of the fibrous product in step e).

In one embodiment the present invention relates to a method as given above, wherein said non-animal binding agent has a moisture content below 15% by weight.

In another embodiment the present invention relates to a method as given above, wherein the vegetable protein applied in step a) is derived from a plant selected from the group comprising soya, pea, lupine, rapeseed, potato, beans, corn, or rice.

In a further embodiment the present invention relates to a method described above_{.} comprising preparing a protein-hydrocolloid composition wherein the hydrocolloid/ vegetable protein ratio is comprised between 5 and 0.05.

In another embodiment the present invention relates to a method as given above, wherein step b) includes mixing or spraying of the aqueous ion solution on the composition.

In another embodiment the present invention relates to a method as given above, wherein said ion solution is applied at a concentration of between 0.1-30 % w/w.

In another embodiment the present invention relates to a method as given above, wherein said ion solution is applied at a ratio of ion solution / composition of between 0.05 and 5.

In another embodiment the present invention relates to a method as given above, wherein said non-animal binding agent essentially comprises a vegetable protein derived from a plant selected from the group comprising soya, pea, lupine, rapeseed, potato, beans, com or rice.

In a further embodiment the present invention relates to a method as given above, wherein the vegetable protein comprised in the non-animal binding agent is selected from the group comprising a vegetable protein isolate, a vegetable protein flour and/or a vegetable protein concentrate.

In another embodiment the present invention relates to a method as given above, wherein the vegetable protein comprised in the non-animal binding agent comprises at least 80 % by dry weight of protein.

In another embodiment the present invention relates to a method as given above, wherein the vegetable protein comprised in the non-animal binding agent comprises less than 10 % by dry weight of fat.

In another embodiment the present invention relates to a method as given above, wherein the vegetable protein comprised in the non-animal binding agent has a protein dispersibility index (PDI) of at least 60%.

In a further embodiment the present invention relates to a method as given above, wherein said non-animal binding agent is applied at a concentration of between 5 and 15 % w/w on the fibrous product.

In another embodiment the present invention relates to a method as given above, wherein processing of said product comprises shaping the product in a desired three-dimensional shape_{.}

In another embodiment the present invention relates to a method as given above, further comprising heating the shaped product at a temperature of between 150 and 220°C during 1 to 15 minutes.

The present invention further relates to a fibrous product obtainable by performing steps a) to c) or a) to d) of the method as given above, wherein said method comprises the step of blending a non-animal binding agent in powder form with the fibrous product of step c) or d).

According to the present invention, said fibrous product may have a protein content of at least 8 % w/w, and a fat content lower than 10% w/w.

The present invention also relates to a vegetable food product obtainable by performing the method as set out above.

According to the present invention, said food product may have a protein content of at least 10% w/w and a fat content below 10% w/w.

The present specification describes a method for preparing a non-animal food product or a vegetable food product. The product is a bound and processed fibrous product comprising vegetable proteins and hydrocolloids. The method comprises the steps of:
a) preparing a protein-hydrocolloid composition by mixing a vegetable protein with a hydrocolloid selected from the group consisting of alginates and/or carrageenans,
b) blending the composition of step a) with an aqueous di- or more valent ion solution or dispersion thereby obtaining a fibrous product,
c) rinsing of the fibrous product obtained in step b),
d) optionally concentrating the rinsed fibrous product of step c), and
e) processing the fibrous product of step c) or d) thereby obtaining said vegetable food product.

The present method is in particular characterized in that it comprises the additional step of blending a non-animal or vegetable binding agent with the fibrous product of step c) or d) prior to processing of the fibrous product in step e).

According to the present invention, the non-animal or vegetable binding agent is added in powder form to the fibrous product of step d). It has been found that a non-animal or vegetable binding agent when applied in powder form, results in the preparation of a vegetable food product that has excellent binding properties. A non-animal or vegetable binding agent applied in powder form is an excellent binder for textured vegetable food products.

The term *"non-animal food product"* refers to a food product that does not contain components of animal origin. Such food product may comprise vegetable components and/or synthetic components which are only derived from non-animal sources, and for instance synthetic components derived from vegetable sources. The non-animal food product may comprise a non-animal binding agent or a vegetable binding agent.

The term *"vegetable food product'* refers to a food product that essentially comprises components of vegetable origin, and that may further comprise one or more components of non-animal origin. The term *"essentially'* used in this context refers to a food product that may comprise up to 60% by weight, and preferably up to 70%, 80%, 85%, 90%, 95%, 98%, 99% or even 100% by weight of vegetable components. In other words, the present vegetable food product refers to a food product that may comprise less than 40% by weight, and preferably less than 30%, 20%, 15%, 10%, 5%, 2%, or 1 % of non-animal components. According to a preferred embodiment of the present invention, the vegetable food product is a 100% vegetable food product and does not contain any components of animal origin. In another preferred embodiment, the vegetable food product is a gluten-free food product. In yet another embodiment, the vegetable food product is a gluten-free and 100% vegetable food product. The non-animal food product may comprise a non-animal binding agent or a vegetable binding agent.

In certain embodiments of the present invention, the terms *"non-animal food product'* and *"vegetable food product'* are used herein as synonyms.

The present specification further describes a method for preparing a non-animal food product wherein a non-animal binding agent which is an essentially vegetable binding agent is applied. The term *"non-animal binding agent"* refers to a binding agent that does not contain components of animal origin. Such binding agent has as main component vegetable components. The non-animal binding agent according to the present invention may further comprise one or more components of non-animal origin such as for instance but not limited to starch and/or gums (e.g. carboxymethylcellulose). The non-animal binding agent according to the present invention essentially comprises a vegetable protein. The term *"essentially'* used in this context refers to a non-animal binding agent that may comprise more than 60% by dry weight, and preferably more than 70%, 80%, 85%, 90%, 95%, 98%, 99% or even 100% by dry weight of a vegetable protein. In other words, the present non-animal binding agent refers to a binding agent that comprises less than 40% by dry weight, and preferably less than 30%, 20%, 15%, 10%, 5%, 2%, or 1% by dry weight of non-animal components.

The term *"vegetable binding agent'* refers to a binding agent that essentially comprises a vegetable protein, and that may further comprise one or more components of non-animal origin such as for instance but not limited to starch and/or gums (e.g. carboxymethylcellulose). The term *"essentially'* used in this context refers to a vegetable binding agent that may comprise more than 60% by weight, and preferably more than 70%, 85%, 90%, 95%, 98%, 99% or even 100% by weight of a vegetable protein. In other words, the present vegetable binding agent refers to a binding agent that comprises less than 30% by weight, and preferably less than 20%, 15%, 10%, 5%, 2%, or 1% by dry weight of non-animal components.

In certain embodiments of the present invention, the terms *"non-animal binding agent'* and *"vegetable binding agent"* are used herein as synonyms.

According to a preferred embodiment of the present invention, the non-animal or vegetable binding agent is a 100% vegetable binding agent and does not contain any components of animal origin. In another preferred embodiment, the non-animal or vegetable binding agent is a gluten-free binding agent. In yet another embodiment, the vegetable food product is a gluten-free and 100% vegetable food product. In a preferred embodiment, the vegetable binding agent is a 100% vegetable protein. In another preferred embodiment, the non-animal binding agent is a 100% vegetable protein.

In accordance with the present invention, a method is provided for preparing a product that has a fibrous structure resembling that of meat products. The food products obtained by carrying out the present method show improved nutritional properties, e.g. high protein content and low fat content, improved organoleptic properties, e.g. a better taste, and better texture properties, especially a better "mouthfeel" or "bite" than vegetable products that are prepared with preparation methods available in the prior art.

The present invention also provides a method for preparing vegetable food products that have improved binding properties. By addition a non-animal binding agent of vegetable origin to the fibrous product, a food product can be obtained that is much better bound facilitating its further processing into certain three-dimensional shapes. The applicant has shown that addition of a vegetable binding agent to the obtained fibrous product greatly improves the food products' subsequent processability. Moreover, the applicant has shown that by applying a binding agent or vegetable binding agent in powder form, a food product can be obtained that shows improved binding properties; which greatly facilitates its further processing.

It is further noted that the present invention provides a method for preparing a vegetable food product wherein all starting materials and ingredients or solutions applied in the method have non-animal origin and therefore are animal-free. More preferably, the starting material used to prepare the food product as well as the binding agent to bind the obtained fibrous product, are derived from vegetables. Other solutions and ingredients that are used in the method are not derived from animals. Therefore, in accordance with the present method contamination of compounds of animal origin is avoided during the complete production process of the fibrous product, and of the vegetable food product. The present invention thus provides a method for preparing vegetable food products wherein contamination with compounds of animal origin is avoided during the complete preparation method. The present method permits to prepare a food product which is particularly suitable for specific consumer groups such as vegetarians or vegans.

In addition, in a preferred embodiment of the method, the food products of the present invention are obtained from starting materials which are gluten-free and the ingredients and/or solutions applied in the method do not contain gluten. The present food product obtainable by the present method is therefore also particularly suitable for people suffering from a gluten allergy.

In another aspect, the invention relates to a fibrous product obtainable by performing steps a), b) and c) or steps a), b), c) and d) of the present method.

In yet another aspect, the invention provides a food product, which is obtainable by applying the present method. The vegetable food product is a fibrous product that has been blended with a non-animal or vegetable binding agent as defined herein. The present food product obtained with the method of the present invention has optimal nutritional, and texture properties, and shows good binding properties so that it is easy to be further processed (configured) into any desired three-dimensional shape. More in particular, the food product, as indicated above, shows improved nutritional properties, including improved digestibility, better organoleptic and structural (texture, fibers) characteristics by providing an improved "mouthfeel" and "bite" perception.

With the insight to better show the characteristics of the invention, some preferred embodiments of the present method and the fibrous product and vegetable food product obtained by carrying out said method are described hereafter.

### Detailed description of the invention

The present invention is directed to a non-animal food product which is an essentially vegetable food product and to a method for obtaining such product. The method first comprises the preparation of a fibrous product, which is subsequently processed (configured) to a food product, having a certain suitable shape. In a preferred embodiment, the present invention provides a method for preparing a 100% vegetable, preferably gluten-free, food product.

### Definitions

The term ***"food product"*** is used herein in a broad sense, and covers food for humans. Preferably the food product refers to a meat or fish substitute product. The food product comprises more than 50% by weight, and preferably more than 70% by weight and more preferably more than 85 % by weight of (concentrated) fibrous product. The food product may be in the form of a solid, e.g. in the form of a burger, croquettes, nuggets, balls, sticks, sausages, pieces, filled products like cordon blue (but without animal protein), minced vegetable meat etc.

The term ***"fibrous product"*** as used herein refers to a product obtainable by performing steps a), b) and c) or steps a), b), c) and d) of the present method and that substantially comprises fibers. The term "substantially" in this context refers to a product that may comprise more than 50% by weight, and preferably more than 60%, 70%, 80%, 85%, 90%, 95%, 98%, 99% or even 100% by weight of fibers.

The terms ***"vegetable"*** or ***"of vegetable origin"*** are used herein in order to indicate that the product to which they refer contains compounds derived from plants or plant parts. The term "*100% vegetable"* is used herein to indicate that the product to which they refer only contains compounds derived from plants or plant parts. 100% vegetable products do not contain compounds of animal origin and are thus animal-free. The terms *"non-animal'* or ***"animal-free"*** are used herein in order to indicate that the products, ingredients or solutions to which they refer do not contain compounds of animal origin.

The term ***"gluten-free"*** as used herein refers to products, ingredients or solutions which do not contain gluten protein. Such gluten proteins are found in some cereals, notably wheat, rye and barley.

### Preparation method

### Step a)

In a first step the present method comprises preparing a protein-hydrocolloid composition by mixing a vegetable protein with an alginate or a carrageenan, which both precipitate with metal cations. The protein-hydrocolloid composition is prepared in the form of a dispersion, such as a suspension or an emulsion.

The *"**vegetable protein"*** used in the present method is a protein that is derived from plants or plant parts and that is substantially animal free. This term excludes proteins that are derived from animals or fish, e.g. from milk or milk products (e.g. caseins, caseinates, and whey proteins) or eggs (e.g. chicken egg albumin), or bovine or fish gelatin. The vegetable protein is derived from a plant preferably selected from the group comprising soya (or soybean), pea, lupine, rapeseed, potato, rice, beans, or corn. Particularly preferred examples of plants from which the vegetable protein applicable in the present invention can be obtained include plants of the family of the *Leguminaceae* such as soya, pea, or lupine.

In a preferred embodiment, the vegetable protein applied in step a) is a 100% vegetable protein, and more preferably a gluten-free 100% vegetable protein.

The vegetable protein can be applied in step a) in the form of a milk (e.g. as soymilk), isolate, concentrate or a flour.

In an example, the vegetable protein used as starting material in the present method and applied in step a), can be a soya protein that is applied in the form of soy milk, or soy milk prepared from whole soybeans, or soy milk prepared from whole defatted soybeans.

The hydrocolloid applied in the present invention preferably is a hydrocolloid which precipitates with cations, preferably metal cations, with a valency of at least 2. The hydrocolloid is a polysaccharide, which is selected from the group comprising carrageenans and/or alginates.

In a preferred embodiment, the hydrocolloid is an alginate, and preferably a sodium, potassium or ammonium alginate. These alginates gel with di-or more valent (metal) ions. Examples of suitable alginates are alginates having a viscosity in (1 % aq.sol) 100-1000 mPa.s, more preferably 400-600 mPa.s. Viscosity can be measured at 20°C using a Brookfield viscometer type RV (e.g. RVT) with a Brookfield RV spindle, preferably with a spindle number 2 and with spindle guard at 20 rpm. In an example 1% alginate dispersed in deionized water has a conductivity lower than 10 microS/cm.

The monomeric building units of alginate are (1,4)beta-D-mannuronate (M) and (1,4)alpha-L-guluronate (G). The ability of alginate to gel is determined by the proportion and length of G-blocks in its molecular structure. Three different M- or G-block profiles can be determined by nuclear magnetic resonance spectroscopy (NMR): % MM, %MG&GM and %GG. The sum of those three percentages is 100%. In a preferred embodiment, the alginate applied in the present method is an alginate containing a %GG, which is higher than 25%, more preferably higher than 30%, even more preferably higher than 45%, most preferably higher than 50%. The origin of the alginate is preferably a seaweed, more preferably a seaweed of the type *Laminaria hyperborea,* or *Laminaria digitata,* or *Lessonia trabeculata,* or *Ecklonia maxima,* even more preferably a seaweed of the type *Laminaria hyperborea* or *Lessonia trabeculata,* most preferably an alginate from the stem of the seaweed of the type *Laminaria hyperborea.*

In another embodiment, the hydrocolloid is a carrageenan. Carrageenans applied in the present application may comprise κ-carrageenan or τ-carrageenan or blends of κ- and τ-carrageenan. τ- and κ- carrageenans are capable of forming gels with di-or more valent ions, for example with calcium ions. The applied carrageenans optionally may comprise low amounts of λ-carrageenan.

The vegetable protein may be applied in the form of a powder or in the form of a dispersion, the latter can be obtained by mixing vegetable protein powder with water. To the vegetable protein dispersion ingredients such as oil of vegetable origin, fat of vegetable origin, sugar, vitamins and optionally herbs may be further added before, during or after mixing or homogenizing the dispersion. Preferably the vegetable protein applied in step a) is in the form of an emulsion (e.g. soya beverage), and more preferably in the form of a partially defatted emulsion.

The hydrocolloid, and preferably an alginate, may be used in powder form or as a dispersion in water. A vegetable protein in powder form can be added to a hydrocolloid (e.g. alginate) dispersion. Alternatively, the hydrocolloid in powder form or provided as a dispersion in water is mixed with the vegetable protein dispersion or emulsion. The vegetable protein and the hydrocolloid are mixed until a homogeneous mixture or dispersion is obtained, which is herein also denoted as a protein-hydrocolloid composition.

In another embodiment, the present method comprises the step of adding a complex-forming agent, herein also denoted as sequestrant, to the vegetable protein dispersion or emulsion and/or to the hydrocolloid dispersion before mixing the protein and the hydrocolloid to form a protein-hydrocolloid composition. In certain cases, when the vegetable protein dispersion contains high levels of di- or more valent ions, such as for instance but not limited to Ca²⁺, Mg²⁺, or Al³⁺, at the moment of, or after mixing the vegetable protein dispersion with the hydrocolloid dispersion, a too viscous composition may be created or a kind of fibrous material will be formed which is not requested. In order to overcome such problem, addition of a sequestrant to the vegetable protein dispersion or emulsion and/or to the hydrocolloid dispersion may be preferred. In the case that the hydrocolloid is added to the vegetable protein in a powder form, the sequestrant can be added to the vegetable protein dispersion. Non limiting examples of sequestrants which may be used in the present invention include: a phosphate, a polyphosphate, and/or a citrate. Preferably the sequestrant is applied at a concentration of more than 50 weight % of the present di- or more valent ions. Advantageously, addition of a sequestrant results in a mixture of protein and hydrocolloid with no forming of unrequested fibrous material. The latter also means that both proteins and polysaccharides, preferably alginates, can swell totally, and this will increase juiciness of the resulting fibrous product obtained after step b).

The ratio between hydrocolloid (alginate) and vegetable protein is important: it is an object to incorporate substantially the whole of the added amount of the components in the final composition. In a preferred embodiment, the method according to the invention therefore comprises preparing a protein-hydrocolloid composition wherein the hydrocolloid/protein ratio is between 5 and 0.05, preferably between 2 and 0.1, most preferably between 1.5 and 0.15.

The above-defined ratio is crucial for the final chewiness, juiciness and firmness of the resulting fibrous product obtained after step b). More in particular, especially the concentration of hydrocolloid determines the moisture content of the fibrous product and also the firmness and juiciness of its texture. If too much hydrocolloid, e.g. alginate, is used, chewiness or gumminess is too high. If too much other components are present besides the hydrocolloid, e.g. vegetable protein, the firmness of the fibrous product is too low or even substantially no fibrous product can be obtained.

The protein-hydrocolloid composition obtained by the above-described method step can be further described by means of the following characteristics. Preferably, the protein-hydrocolloid composition has a hydrocolloid content, preferably an alginate content of at least 3 % w/w, preferably at least 5 % w/w, more preferably at least 10 % w/w. Also, the protein-hydrocolloid composition has a protein content of at least 4 % w/w, preferably at least 10 % w/w, more preferably at least 20% w/w. In another embodiment, the fibrous product has a fat content, preferably a vegetable fat content below 10 % w/w, preferably below 7 % w/w, more preferably below 4 % w/w.

Mixing the vegetable protein with hydrocolloid, e.g. alginate, can be performed with a mixer, blender, stirrer, homogenizer or any other mixing or blending device, at a temperature between 0 °C and 100 °C, preferably between 4 °C and 95 °C, more preferably between 10° and 85°C, most preferably above 60°C, and at a pH-value between 2 and 10, preferably between 3 and 8, more preferably between 4 and 7, most preferably between 5 and 7, and at an ionic strength below 500 mM, preferably below 100 mM, more preferably below 20 mM.

### Step b)

In a second step the method comprises blending the composition of step a) with an aqueous ion solution thereby obtaining a fibrous product. The present method comprises preparation of an ion solution or ion dispersion. Preferably the ion solution comprises a solution of an ion with a valency of at least two. Non limitative examples of suitable ion solutions comprise solutions of calcium, aluminum and/or magnesium salts, and preferably a CaCl₂, calcium acetate, calcium gluconate, MgCl₂, AlCl₃, or CaSO₄ solutions, and preferably a CaCl₂ solution. Preferably the ion solution or dispersion is applied at a concentration of between 0.1 and 30 % w/w, preferably of between 0.5 and 20 % w/w and most preferably of between 1 and 10 % w/w The concentration of the ion solution has a beneficial effect on the total reaction time, and so also on the length of the fiber. Use of a suitable concentration of ion solution is important: if the concentration is too high, the reaction with all hydrocolloid (alginate) is going too fast and substantially all hydrocolloid, e.g. alginate, is (almost) immediately reacted, leading to the formation of a certain structure, which is not preferred. If the concentration is too low, the reaction with hydrocolloid, e.g. alginate, is going too slow, resulting in too long reaction times, which is an economical disadvantage.

The ratio of di- or more valent ion solution or dispersion to the protein-hydrocolloid composition (dispersion) is strongly dependent on the valency of the chosen ions and on the concentration of the protein-hydrocolloid composition (dispersion). Preferably according to the present method, the ion solution is blended with the protein-hydrocolloid composition at a ratio of ion solution / protein-hydrocolloid composition of between 0.05 and 5, preferably of between 0.1 and 1, more preferably of between 0.15 and 0.8, most preferably of between 0.2 and 0.5.

The ion solution or dispersion may be simply mixed with the protein-hydrocolloid composition of step a). The ion solution or dispersion may be mixed with the protein-hydrocolloid composition under continuous stirring or mixing. Preferably the ion solution is gradually mixed with the protein-hydrocolloid composition and the ion solution is hereby slowly or gradually added. For this purpose this mixing step may be carried out in a device such as but no limited to a paddle mixer.

Alternatively, the present method may comprise spraying the ion solution or dispersion on the protein-hydrocolloid composition of step a). The ion solution is gradually sprayed on the protein-hydrocolloid composition, the latter being continuously stirred, mixed or blended.

When mixing or spraying the ion solution, gradual formation of a fibrous or chunky product is (visually) noticed. The speed of mixing, blending or stirring of the protein-hydrocolloid composition during the gradual addition of the ion solution or dispersion is crucial for the form and formation of the fibrous or chunky product. When this speed is high, rather short fibrous or chunky material is formed, whereas at low speed, a rather long fibrous product is formed.

Mixing the protein-hydrocolloid composition with the ion solution or dispersion can be performed at a temperature of between 0 °C and 100 °C, preferably of between 4 °C and 95 °C, more preferably of between 10°C and 74°C, or between 15°C and 35 °C, most below 20 °C, and at a pH-value of between 2 and 10, preferably of between 3 and 8, more preferably of between 4 and 7, most preferably of between 5 and 7.

### Step c)

In a next step, the redundant water or ion solution is removed from the fibrous product through draining off, filtering, moderate squeezing or a similar technique. The fibrous product is preferably thoroughly washed and rinsed one or multiple times with water or an aqueous solution to further remove the non-reacted salts. The latter procedure results in a better, much more neutral and less salty taste of the resulting food product.

### Step d)

In a next step, the rinsed fibrous product of step c) is concentrated. Optionally, in a subsequent step the fibrous product can be cut into smaller pieces or fibers. Optionally, the fibrous product can also be further squeezed or pressed towards a higher dry matter. A next step may optionally also comprise the at least partial drying of the rinsed fibrous product to obtain a desired dry matter.

### Step in between d) and e)

The present method further comprises the step of blending a non-animal binding agent, and preferably a vegetable binding agent with the fibrous product of step d) prior to processing of the fibrous product. The term *"binding agent"* as used herein refers to a component of which is capable of making a loose mixture or loose fibers or loose chunks stick together.

As noted above the term non-animal binding agent has as main component, i.e. more than 60% on dry weight, preferably more than 70, 80, 90, 95% of a vegetable protein and may optionally contain other non-animal components (such as starch or gums). Preferably the non-animal binding agent only contains a vegetable protein, more preferably the origin of this vegetable protein is a plant of the family of the Leguminosae, most pref. it is a soya protein.

The non-animal binding agent or vegetable binding agent thus essentially comprise a vegetable protein derived from a plant selected from the group comprising soya(bean), pea, lupine, rapeseed, potato, rice or beans. Particularly preferred examples of plants from which the vegetable protein applicable in the present invention can be obtained include plants of the family of the *Leguminaceae (Leguminosae),* such as soya, pea, or lupine, and most preferably soya. In one embodiment, the vegetable protein comprised in the non-animal binding agent or vegetable binding agent applied in the present method is the same as the vegetable protein applied in step a) of the method. In another embodiment, the vegetable protein comprised in the non-animal binding agent or vegetable binding agent applied in the present method is different from the vegetable protein applied in step a) of the method. In a preferred embodiment, said non-animal binding agent or vegetable binding agent comprises a vegetable protein, preferably a 100% vegetable protein, and even more preferred a gluten-free 100% vegetable protein.

The vegetable protein comprised in the non-animal binding agent or vegetable binding agent preferably comprises at least 80% by dry weight of protein, more preferably at least 85%, at least 90%, or at least 95% by dry weight. In another preferred embodiment the invention relates to a method wherein said vegetable protein comprised in the non-animal binding agent or vegetable binding agent comprises less than 10 % by weight, and preferably less than 7 % by weight, more preferably less than 4% by (dry) weight of fat. In yet another embodiment, the vegetable protein comprised in the non-animal binding agent or vegetable binding agent preferably comprises at least 80% of protein on fat-free dry weight basis, more preferably at least 85%, at least 90%, or at least 95% of protein on fat-free dry weight basis.

In a preferred embodiment of the present invention, the non-animal binding agent or vegetable binding agent comprises a vegetable protein which is selected from the group comprising a vegetable protein isolate, a vegetable protein flour, and/or a vegetable protein concentrate. Examples of suitable vegetable proteins comprised in a binding agent according to the invention include but are not limited to for instance soya protein isolate (SPI), pea protein isolate, soya protein flour, pea protein flour, soya protein concentrate (SPC), or pea protein concentrate.

In a preferred embodiment, the vegetable protein comprised in the non-animal binding agent or vegetable binding agent is soybean protein, and preferably a soya protein isolate (SPl), a soya protein flour, and/or a soya protein concentrate (SPC). Most preferably it is a soya protein isolate.

Soybean proteins can be classified into 2S, 7S, 11S and 15 S proteins. As is well known by a skilled person, the symbol S denotes Svedberg, which is a physical unit used to characterize the behaviour of a particle type in ultracentrifugation. Bigger particles have higher Svedberg values. It is a unit of time amounting to 10¹³ s or 100 fs. Isolates, concentrates and/or flour containing soybean proteins can comprise one or a combination of one or more of these 2S, 7S, 11 S, and 15 S proteins.

In a preferred embodiment, the vegetable protein comprised in the non-animal or vegetable binding agent according to the invention is a soybean protein isolate (SPI): Said SPI preferably comprises more 11S protein than 7S protein. The ratio of the amount of 11S to the amount of 7S protein in said SPI is preferably higher than 1.

In another preferred embodiment, the vegetable protein comprised in the non-animal or vegetable binding agent according to the invention is a soybean protein concentrate (SPC). Said SPC preferably comprises more 11S protein than 7S protein. The ratio of the amount of 11S to the amount of 7S protein in said SPC is preferably higher than 1.

In yet another preferred embodiment, the vegetable protein comprised in the non-animal or vegetable binding agent according to the invention is a soya protein flour (SPF). Said SPF preferably comprises more 11S protein than 7S protein. The ratio of the amount of 11S to the amount of 7S protein in said soya protein flour is preferably higher than 1.

A binding agent comprising as vegetable protein a soybean protein, and preferably a SPI, SPF or SPC, whereby said soybean protein comprises more 11S protein than 7S protein, thus whereby the ratio of the amount of 11S to the amount of 7S protein in said SPl, SPC or SPF is higher than 1, has been shown to provide several improved effects compared to a binding agent comprising as vegetable protein a soybean protein having other relative amounts of S-classes of proteins, and in particular having less 11S than 7S proteins.

In another preferred embodiment, the vegetable protein comprised in the non-animal binding agent or vegetable binding agent is a soybean protein, and preferably a soya protein isolate (SPI), a soya protein flour (SPF), or a soya protein concentrate (SPC), whereby said isolate, flour or concentrate essentially comprises 11S protein. The term *"essentially comprises"* in this context is intended to refer to a soybean protein, and preferably a SPI, SPC and/or SPF, wherein the total amount of 11S protein comprises more than 30 wt%, and preferably more than 40 wt%, and even more preferred more than 45, 50, 55, 60, 65, 70, 75, 80, 85, 90, 95, or 98 wt% of 11 S protein.

The vegetable protein comprised in the non-animal binding agent or vegetable binding agent contains as less polysaccharides as possible. The vegetable protein has a functionality as high as possible, as native as possible, as non-denatured as possible. Therefore the vegetable protein comprised in the non-animal binding agent or vegetable binding agent according to the present invention preferably has a protein dispersibility index (PDI) of at least 60%, more preferable of at least 70%, 80%, 90%, or 95%. The protein dispersibility index (PDI) is defined as the percent of total protein that disperses in water under standard conditions. PDI can be measured using the AOCS official method Ba 10-65, which is well known to a skilled person.

The present binding agent acts as an excellent binder and may form a heat-coagualable gel. The binding agent permits to bind the protein-containing fibers sufficiently together so as to maintain the fixed shape of the meat-like product which is finally processed. The present binding agent is capable of attaining such effect due to its superior binding properties.

In a preferred embodiment, the non-animal binding agent or vegetable binding agent is applied in the present method at a concentration of between 5 and 15% w/w, and preferably between 9 and 13 % w/w on the fibrous product.

The invention comprises addition of the non-animal binding agent or vegetable binding agent in powder form to the fibrous product. To the powdered non-animal or vegetable binding agent, optionally other ingredients such as salt or herbs may be added. In a preferred embodiment, the other ingredients such as salt or herbs are applied in the present method at a concentration of between 1 and 7% w/w, and preferably between 3 and 5% w/w on the fibrous product. Preferably, the binding agent has a moisture content below 15% by weight, preferably below 12.5% by weight, more preferably below 10% by weight, most preferably below 6% by weight.

It has been found that a non-animal or vegetable binding agent as defined herein when applied in powder form in the present method is very effective for binding together a fibrous product as defined herein in order to form desirable shaped vegetable food products. The term *"powder form"* as used herein refers to a binding agent which is provided in the form of particles.

It has been shown that in accordance with the present invention, blending of a binding agent in powder form with a fibrous product imparts improved binding properties to the end products, i.e. to the vegetable food products, and that better binding properties can be imparted when using a binding agent in powder form compared to a binding agent in a soluble form, as has been suggested in the prior art.

In an embodiment, the invention comprises blending of a powdery non-animal binding agent or vegetable binding agent to the fibrous product that is directly obtained after method step d) according to the present invention. In accordance with the present invention, the fibrous product is preferably not hydrated with additional (extra) water prior to adding the binding agent. Furthermore, preferably after addition of the binding agent to the fibrous product, no additional aqueous solution (e.g. water) is added to the fibrous product.

Surprisingly, it has been shown that, according to the invention, there is no need to add an aqueous solution to the fibrous product before and/or after it has been blended with a powdery binding agent as defined herein in order to obtain suitable binding properties. Also, there is no need to hydrate the binding agent before it is blended with the fibrous product. In contrast, addition of the present binding agent in powder form to the fibrous product obtained in step d) of the method results in a product that shows excellent binding properties.

The binding agent can be added to the fibrous product obtained after performing steps a) to d) of the present method, when such fibrous product comprises a moisture content which is higher than 50 % w/w, for instance a moisture content of between 50 and 90 % w/w, preferably of between 60 and 85% w/w, even more preferably of between 70 and 80% w/w.

The moisture content of the fibrous product obtained with the present method is sufficient in order to provide for adequate moistening of the powdery binding agent. The applicant has further shown that blending of a powdery binding agent with the fibrous product obtained in step d) of the present method, without further addition of an aqueous solution to the fibrous product either before or after the blending step enables to prepare a vegetable product showing improved binding properties, and improved organoleptic and textural properties. In particular, a vegetable food product can be obtained that has a structure that resembles more the structure of meat. Moreover, the fibrous product and therefore also the vegetable food product obtained by applying the present method have improved softness or juiciness. Furthermore, the present method permits to use lower amounts of binding agent to obtain satisfying binding properties.

Blending the fibrous product with the non-animal or vegetable binding agent can be performed using a mixer, blender, stirrer, homogenizer or any other mixing or blending device, at a temperature between 0 °C and 100 °C, preferably between 4 °C and 95 °C, more preferably between 10°C and 75°C; or 15°C and 35 °C, most preferably at about room temperature (this is an economical advantage), and at a pH-value between 2 and 10, preferably between 3 and 8, more preferably between 4 and 7, most preferably between 5.5 and 7.

### Step e)

In a next step the fibrous product obtained by carrying out the above-given steps of the method is further processed and as a result thereof the vegetable food end product is obtained.

In one embodiment, processing comprises shaping the fibrous product in a desired three-dimensional shape. Suitable shapes may for instance include: the shape of a burger, croquettes, nuggets, balls, sticks, sausages, pieces etc... The product resulting of such processing step is denoted herein as (shaped) non-heated (not heat-treated) product. The non-heated product may be sold as such, or may optionally undergo a further treatment, such as for instance providing the product with a batter of vegetable origin or breading the product.

In a further embodiment, the method may further comprise heating the shaped product, e.g. in an oven at a temperature of between 150 and 220 °C during 1 to 15 minutes. Heating may comprise steaming, frying, cooking, baking, microwaving or a combination thereof. For example, the product may be fried at temperature of 150 to 180°C during 30 to 60 seconds, after which the product is cooked during 5 minutes at a temperature of 170°C. The latter temperature is selected in order to have a temperature in the core of the product reaching about 80 to 95°C, preferably reaching at least 85°C and more preferably at least 90°C. The product resulting of such heat processing step is denoted herein as (shaped) heated or heat-treated product. By heating the product, advantageously, the non-animal or vegetable binding agent that has been added to the fibrous product undergoes denaturation and coagulation and as a result thereof, adherence of the fibres to one another will be improved. In addition, the heating step is especially also advantageous from a microbiological point of view, as it permits to reduce microbial contamination of the product and thus to increase shelf-life thereof. The latter is very important when spices are present, spices as such have a very high bacterial load.

Optionally, the heated product may be further processed by cooling the heated product and packing the cooled product. Suitable packing methods may comprise vacuum-packing, in which the product is placed into plastic packaging, under a vacuum and the packaging is sealed. Another packaging method includes "modified atmosphere packaging", which involves the practice of modifying the composition of the internal atmosphere of a package. Other packaging methods which can be used in this field may be employed as well.

Optionally, before- packaging, the cooled product may be subjected to an additional heating-cooling cycle. For instance the cooled product may be autoclaved, after which the autoclaved product is cooled.

### Fibrous product

In another aspect, the present invention is directed to a fibrous product which is obtainable by performing steps a), b) and c) or a), b), c) and d) of the present method as defined herein. The fibrous product refers to a product that has not been blended with a vegetable binding agent and/or processed.

The fibrous product obtained by the above-described method steps can be described by means of the following characteristics. Preferably, the fibrous product has a protein content of at least 8 % w/w, preferably at least 10 % w/w, more preferably at least 15 % w/w and most preferably at least 20% w/w. In another embodiment, the fibrous product has a (vegetable) fat content below 10% w/w, preferably below 5 % w/w, more preferably below 3% w/w.

Preferably, the fibrous product has a moisture content which is higher than 50% w/w, and for instance a moisture content of between 50 and 90% w/w, preferably of between 60 and 85% w/w, even more preferably of between 70 and 80% w/w.

The present fibrous product is particularly suitable for being used for preparing a protein-based and fibrous vegetable food product, as defined herein. The present fibrous product can in part replace meat or meat-derived ingredients in meat products (e.g. processed meat products). The present fibrous product can also be used in a food product as an ingredient/component. The present fibrous product can for instance be added to meat products. The addition of soya protein containing products to meat products results in improved nutritional benefits by decreasing fat, cholesterol and calories.

### Vegetable food product

In yet another aspect, the present invention is directed to a vegetable food product, preferably a 100% vegetable food product, which is obtainable by performing the herein described method. The food product may comprise either a non-heated or a heated food product.

The present invention provides a vegetable food product obtained by the above-described method comprising a fibrous product as defined herein bound together with a powdery non animal or vegetable binding agent as defined herein.

The vegetable food product obtained by the above-described method can be described by means of the following characteristics. Preferably, the vegetable food product has a protein content of at least 10% w/w, preferably at least 12% w/w, more preferably at least 15% w/w or 20% w/w. In another embodiment, the vegetable food product has a (vegetable) fat content below 10% w/w, preferably below 5% w/w, more preferably below 3% w/w. In yet another embodiment, the vegetable food product has a carbohydrate content below 15% w/w, preferably below 10% w/w.

Table 1 represents an example of composition of a vegetable food product which is obtained by carrying out the present method.

**Table 1 Vegetable food product**

| **Ingredient** | **Amount % w/w** |
|---|---|
| vegetable protein | 17 |
| vegetable fat | 3 |
| carbohydrates | 7,5 |
| flavoring agents and/or herbs | 2 |
| other ingredients, e.g. water, coloring agents, etc... | up to 100 |

The present food product is obtained by applying a method wherein all method steps are performed under conditions and/or using starting materials, ingredients and solutions which are animal-free. The term "animal-free" in this context refers to starting materials, ingredients and solutions wherein components of animal origin are not added. Therefore, the final food product is a product which suits vegan as well as vegetarian people. Furthermore, the selection of gluten-free starting materials, ingredients and solutions permits to produce a food product which is particularly suitable for people suffering from wheat or gluten allergy, the method permits to produce a suitable food product without the use of wheat or gluten. The present vegetable food products are further characterized in that they have good nutritional properties; they are lower in calories and fat, and have lower amounts of saturated fats and cholesterol than conventional meat products. Furthermore, the vegetable food products have texture properties such as elasticity, chewiness, cohesiveness, moistness, and obtain a "bite" and rheology compatible with that of natural meat. In addition, the present vegetable food products can be organic products, e.g. so-called "bio"- products. In addition, a vegetable food product obtained by carrying out the method of the present invention, has improved binding properties, i.e. it is much better bound which facilitates its further processing into certain three-dimensional shapes and it greatly improves the vegetable products' subsequent processability and integrity, including during subsequent baking or cooking processes.

### Example

In an example, 600 kg of soya milk and 22 kg of alginate are mixed and a soya-alginate composition is formed. The soya milk contains 5 % by weight of protein and 2.8% by weight of fat. A 10% w/w salt solution is prepared in the meantime by dissolving 20kg of calcium chloride in 200 kg of water. The salt solution is slowly added, preferably by spraying on the soya-alginate composition, whereby a fibrous product is formed. The fibrous product is rinsed with water or an aqueous solution to remove the non-reacted calcium salts, and the fibrous material is leaked out in order to yield about 300 to 500 kg of fibrous product.

In a next step, about 50 kg of a powdery composition comprising SPI, salt and herbs is added to the fibrous product. Preferably 2 kg starch can be added to the fibrous product. The obtained dough is then processed into the shape of burgers. Subsequent steps involve the coating of the burgers with a batter of vegetable origin and/or with bread crumbs and different kind of vegetable flakes like cornflakes. The burgers are then heated about 10 minutes at a temperature of between 200 °C during in order to have a temperature in the core of the product reaching about 90°C or pre-fryed in a deepfryer for about 4 min at 180°C. The heated burger is cooled to room temperature and subsequently undergoes an autoclave - cooling cycle. Finally, the burger is packed.

The obtained burger shows improved nutritional properties, e.g. high protein content and low fat content, improved organoleptic properties, e.g. a better taste, and better texture properties, especially a better "mouthfeel" or "bite" , and has improved binding properties compared to burgers prepared with preparation methods available in the prior art.

## Claims

1. Method for preparing a vegetable food product comprising the steps of:
a) preparing a protein-hydrocolloid composition by mixing a vegetable protein with a hydrocolloid selected from the group consisting of alginates and/or carrageenans,
b) blending the composition of step a) with an aqueous di- or more valent ion solution or dispersion thereby obtaining a fibrous product,
c) rinsing of the fibrous product obtained in step b),
d) optionally concentrating the rinsed fibrous product of step c), and
e) processing the fibrous product of step c) or d) thereby obtaining said vegetable food product,
**characterized in that** the method comprises the additional step of blending a non-animal binding agent in powder form with the fibrous product of step c) or d) prior to processing of the fibrous product in step e).

2. Method according to claim 1, wherein said non-animal binding agent has a moisture content below 15% by weight.

3. Method according to claim 1 or 2, wherein the vegetable protein applied in step a) is derived from a plant selected from the group comprising soya, pea, lupine, rapeseed, potato, beans, com, or rice.

4. Method according to any of claims 1 to 3 comprising preparing a protein-hydrocolloid composition wherein the hydrocolloid/vegetable protein ratio is comprised between 5 and 0.05.

5. Method according to any of claims 1 to 4, wherein step b) includes mixing or spraying of the aqueous ion solution on the composition.

6. Method according to any of claims 1 to 5, wherein said ion solution is applied at a concentration of between 0.1-30 % w/w.

7. Method according to any of claims 1 to 6, wherein said ion solution is applied at a ratio of ion solution / composition of between 0.05 and 5.

8. Method according to any of claims 1 to 7, wherein said non-animal binding agent essentially comprises a vegetable protein derived from a plant selected from the group comprising soya, pea, lupine, rapeseed, potato, beans, corn or rice.

9. Method according to claim 8, wherein the vegetable protein comprised in the non-animal binding agent is selected from the group comprising a vegetable protein isolate, a vegetable protein flour and/or a vegetable protein concentrate.

10. Method according to claim 8 or 9, wherein the vegetable protein comprised in the non-animal binding agent comprises at least 80 % by dry weight of protein.

11. Method according to claims 8, 9, or 10, wherein the vegetable protein comprised in the non-animal binding agent comprises less than 10 % by dry weight of fat.

12. Method according to any of claims 8 to 11, wherein the vegetable protein comprised in the non-animal binding agent has a protein dispersibility index (PDI) of at least 60%.

13. Method according to any of claims 1 to 12, wherein said non-animal binding agent is applied at a concentration of between 5 and 15 % w/w on the fibrous product.

14. Method according to any of claims 1 to 13, wherein processing of said product comprises shaping the product in a desired three-dimensional shape.

15. Method according to any of claims 1 to 14, further comprising heating the shaped product at a temperature of between 150 and 220°C during 1 to 15 minutes.

16. Fibrous product obtainable by performing steps a) to c) or a) to d) of the method according to any of claims 1 to 15, wherein said method comprises the step of blending a non-animal binding agent in powder form with the fibrous product of step c) or d).

17. Fibrous product according to claim 16, having a protein content of at least 8 % w/w, and a fat content lower than 10% w/w.

18. Vegetable food product obtainable by performing the method of any of claims 1 to 15.

19. Food product according to claim 18, having a protein content of at least 10% w/w and a fat content below 10% w/w.

## Patentansprüche

1. Verfahren zur Herstellung eines Gemüsenahrungsmittels umfassend die Schritte:
a) des Herstellens einer Protein-Hydrokolloid-Zusammensetzung durch das Mischen eines pflanzlichen Proteins mit einem Hydrokolloid ausgewählt aus der Gruppe bestehend aus Alginaten und/oder Carrageenen,
b) des Vermischens der Zusammensetzung aus Schritt a) mit einer wässrigen zwei oder mehrwertigen Ionenlösung oder -dispersion, wodurch ein faseriges Produkt erhalten wird,
c) des Spülens des faserigen Produkte erhalten in Schritt b)
d) wahlweise des konzentrierens des gespulten faserigen Produktes aus Schritt c), und
e) des Verarbeitens des faserigen Produktes aus Schritt c) oder d), wodurch das Gemüsenahrungsmittel erhalten wird,
**dadurch gekennzeichnet, dass** das Verfahren den zusätzlichen Schritt des Vermischens eines nichttierischen Bindemittels in Pulverform mit dem faserigen Produkt aus Schritt c) oder d) vor der Verarbeitung des faserigen Produktes in Schritt e) umfasst.

2. Verfahren nach Anspruch 1, wobei das nichttierische Bindemittel einen Feuchtigkeitsgehalt von unter 15 Gew. % aufweist.

3. Verfahren nach Anspruch 1 oder 2, wobei 1 das in Schritt a) eingesetzte pflanzliche Protein aus einer Pflanze ausgewählt aus der Gruppe umfassend Soja, Erbse, Lupine, Raps, Kartoffel, Bohnen, Mals oder Reis stammt.

4. Verfahren nach einem der Ansprüche 1 bis 3, umfassend das Herstellen einer Protein-Hydrokolloid-Zusammensetzung, wobei das Hydrakolloid/Pflanzenprotein-Verhältnis zwischen 5 und 0,05 liegt.

5. Verfahren nach einem der Ansprüche 1 bis 4, wobei Schritt b) das Mischen oder Aufsprühen der wässrigen Ionenlösung mit der/auf die Zusammensetzung beinhaltet.

6. Verfahren nach einem der Ansprüche 1 bis 5, wobei die Ionenlösung mit einer Konzentration zwischen 0,1 und 30 % (w/w) aufgetragen wird.

7. Verfahren nach einem der Ansprüche 1 bis 6, wobei die Ionenlösung in einem Verhältnis von Ionenlösung/Zusammensetzung zwischen 0,05 und 5 aufgetragen wird.

8. Verfahren nach einem der Ansprüche 1 bis 7, wobei das nichttierische Bindemittel im Wesentlichen ein pflanzliches Protein abgeleitet aus einer Pflanze ausgewählt aus der Gruppe umfassend Soja, Erbse, Lupine, Raps, Kartoffel, Bohnen, Mais oder Reis umfasst.

9. Verfahren nach Anspruch 8, wobei das pflanzliche Protein enthalten in dem nichttierischen Bindemittel ausgewählt ist aus der Gruppe umfassend ein pflanzliches Proteinisolat, ein pflanzliches Proteinmehl und/oder ein pflanzliches Proteinkonzentrat.

10. Verfahren nach Anspruch 8 oder 9, wobei das pflanzliche Protein enthalten in dem nichttierischen Bindemittel mindestens 80 % Protein bezogen auf das Trockengewicht

11. Verfahren nach Anspruch 8, 9 oder 10, wobei das pflanzliche Protein enthalten in dem nichttierischen Bindemittel weniger als 10 % Fett bezogen auf das Trockengewicht umfasst.

12. Verfahren nach einem der Ansprüche 8 bis 11, wobei das pflanzliche Protein enthalten in dem nichttierischen Bindemittel einen Proteindispergierbarkeitsindex (PDI) von mindestens 60 % aufweist.

13. Verfahren nach einem der Anspruche 1 bis 12, wobei das nichttierische Bindemittel mit einer Konzentration zwischen 5 und 15 % (w/w) auf das faserige Produkt aufgetragen wird.

14. Verfahren nach einem der Ansprüche 1 bis 13, wobei das Verarbeiten des Produktes das Formen des Produktes in eine gewünschte dreidimensionale Form umfasst.

15. Verfahren nach einem der Ansprüche 1 bis 14, ferner umfassend das Erhitzen des geformten Produktes bei einer Temperatur zwischen 150 und 220 °C für 1 bis 15 Minuten.

16. Faseriges Produkt, welches durch die Durchführung der Schritte a) bis c) oder a) bis d) des Verfahrens gemäß einem der Ansprüche 1 bis 15 erhalten werden kann, wobei das Verfahren den Schritt der Vermischens eines nichttierischen Bindemittels in Pulverform mit dem faserigen Produkt aus Schritt c) oder d) umfasst.

17. Faseriges Produkt nach Anspruch 16, welches einen Proteingehalt von mindestens 8 % (w/w) und einen Fettgehalt von weniger als 10 % (w/w) aufweist.

18. Gemüsenahrungsmittel, welches durch die Durchführung des Verfahrens nach einem der Ansprüche 1 bits 15 erhalten werden kann.

19. Nahrungsmittelprodukt nach Anspruch 18, welches einen Proteingehalt von mindestens 10% (w/w) und einen Fettgehalt von unter 10 % (w/w) aufweist.

## Revendications

1. Procédé de préparation d'un produit alimentaire végétal qui comprend les étapes consistant à :
a) préparer une composition protéine-hydrocolloïde en mélangeant une protéine végétale avec un hydrocolloïde choisi dans le groupe constitué par les alginates et/ou les carragénines,
b) mélanger la composition de l'étape a) avec une solution ou dispersion ionique bivalente ou de valence supérieure permettant ainsi d'obtenir un produit fibreux,
c) rincer le produit fibreux obtenu dans l'étape b),
d) facultativement concentrer le produit fibreux rincé de l'étape c), et,
e) traiter le produit fibreux de l'étape c) ou d) permettant ainsi d'obtenir ledit produit alimentaire végétal,
**caractérisé en ce que** le procédé comprend l'étape supplémentaire consistant à mélanger un agent de liaison n'étant pas d'origine animale sous une forme pulvérulente avec le produit fibreux de l'étape c) ou d) avant le traitement du produit fibreux dans l'étape e).

2. Procédé selon la revendication 1, dans lequel ledit agent de liaison n'étant pas d'origine animale a une teneur en eau inférieure à 15 % en poids.

3. Procédé selon la revendication 1 ou 2, dans lequel la protéine végétale appliquée dans l'étape a) provient d'une plante choisie dans le groupe comprenant le soja, le pois, le lupin, les graines de colza, la pomme de terre, les fèves, le maïs, ou le riz.

4. Procédé selon l'une quelconque des revendications 1 à 3, qui comprend la préparation d'une composition protéine-hydrocolloïde dans laquelle le rapport hydrocolloïde/ protéine végétale est compris entre 5 et 0,05.

5. Procédé selon l'une quelconque des revendications 1 à 4, dans lequel l'étape b) comprend le mélange ou la pulvérisation de la solution ionique aqueuse sur la composition.

6. Procédé selon l'une quelconque des revendications 1 à 5, dans lequel ladite solution ionique est appliquée à une concentration comprise entre 0,1 et 30 % p/p.

7. Procédé selon l'une quelconque des revendications 1 à 6, dans lequel ladite solution ionique est appliquée à un rapport de solution ionique/composition compris entre 0,05 et 5.

8. Procédé selon l'une quelconque des revendications 1 à 7, dans lequel ledit agent de liaison n'étant pas d'origine animale comprend essentiellement une protéine végétale dérivée d'une plante choisie dans le groupe comprenant le soja, le pois, le lupin, les graines de colza, la pomme de terre, les fèves, le maïs ou le riz.

9. Procédé selon la revendication 8, dans lequel la protéine végétale comprise dans l'agent de liaison n'étant pas d'origine animale est choisie dans le groupe comprenant un isolat de protéine végétale, une farine de protéine végétale et/ou un concentré de protéine végétale.

10. Procédé selon la revendication 8 ou 9, dans lequel la protéine végétale comprise dans l'agent de liaison n'étant pas d'origine animale comprend au moins 80 % en poids sec de protéine.

11. Procédé selon les revendications 8, 9 ou 10, dans lequel la protéine végétale comprise dans l'agent de liaison n'étant pas d'origine animale comprend moins de 10 % en poids sec de matière grasse.

12. Procédé selon l'une quelconque des revendications 8 à 11, dans lequel la protéine végétale comprise dans l'agent de liaison n'étant pas d'origine animale a un indice de dispersibilité protéique (IDP) d'au moins 60 %.

13. Procédé selon l'une quelconque des revendications 1 à 12, dans lequel ledit agent de liaison n'étant pas d'origine animale est appliqué à une concentration comprise entre 5 et 15 % p/p sur le produit fibreux.

14. Procédé selon l'une quelconque des revendications 1 à 13, dans lequel le traitement dudit produit comprend le façonnage du produit en une forme en trois dimensions souhaitée.

15. Procédé selon l'une quelconque des revendications 1 à 14, comprenant en outre le chauffage du produit façonné à une température comprise entre 150 et 220°C pendant 1 à 15 minutes.

16. Produit fibreux pouvant être obtenu en réalisant les étapes a) à c) ou a) à d) du procédé selon l'une quelconque des revendications 1 à 15, ledit procédé comprenant l'étape consistant à mélanger un agent de liaison n'étant pas d'origine animale sous une forme pulvérulente avec le produit fibreux de l'étape c) ou d).

17. Produit fibreux selon la revendication 16, ayant une teneur en protéine d'au moins 8 % p/p, et une teneur en matière grasse inférieure à 10 % p/p.

18. Produit alimentaire végétal pouvant être obtenu par la réalisation du procédé selon l'une quelconque des revendications 1 à 15.

19. Produit alimentaire selon la revendication 18, ayant une teneur en protéine d'au moins 10 % p/p et une teneur en matière grasse inférieure à 10 % p/p.
